# DEMANDE DE BREVET EUROPEEN

(11) **EP 0 564 344 A1**
(43) Date de publication de la demande: **06.10.1993**
(21) Numéro de dépôt: 93400803.8
(22) Date de dépôt: 29.03.1993
(51) Int. Cl.: F25D 3/04, F25B 1/00, F25B 39/00

(54) **Dispositif de réfrigération de fluide; son application au traitement de l'air**

(30) Priorité: 30.03.1992 FR 9203831
(71) Demandeur: CARRIER S.A., F-01120 MONTLUEL (FR)
(72) Inventeur: Mauer, Georges, F-27000 Evreux (FR); Simplex, Bernard, F-27220 Saint-Andre-de-l'Eure (FR)
(74) Mandataire: Martin, Jean-Jacques

(57) **Abrégé**

La présente invention concerne un dispositif de réfrigération de fluide, comportant un bac (5) de production et de stockage de glace et des moyens (12, 9) pour faire circuler dans ce bac (5) respectivement un fluide réfrigéré et un fluide à réfrigérer en les plaçant en relation d'échange thermique avec la glace. Lesdesdits fluides sont gazeux et sont par exemple de l'air, et on peut les faire circuler dans le bac (5) soit indépendamment l'un de l'autre, soit en alternance, auquel cas un même fluide peut constituer alternativement le fluide réfrigéré et le fluide à réfrigérer.

La conception du dispositif de réfrigération en est simplifiée et son utilisation en est rendue plus fiable.

## Description

La présente invention concerne un dispositif de réfrigération de fluide, comprenant :
- un bac de production et de stockage de glace,
- des moyens pour faire circuler dans le bac un fluide réfrigéré en le plaçant en relation d'échange thermique avec la glace,
- des moyens pour faire circuler dans le bac un fluide à réfrigérer en le plaçant en relation d'échange thermique avec la glace.

On a récemment commencé à utiliser des dispositifs de réfrigération de fluide comportant un bac de production et de stockage de glace pour alimenter en frigories des installations de traitement d'air, et par exemple de climatisation, dans lesquelles l'air à traiter traverse notamment une batterie dite "froide" d'échange thermique avec un liquide anti-gel tel que de l'eau glycolée, porté à une température inférieure à la température ambiante et qu'une pompe fait à cet effet circuler entre cette batterie froide et le bac de production et de stockage de glace, dans lequel ce liquide anti-gel évolue dans une relation d'échange thermique direct avec la glace, librement ou de façon guidée par des chicanes ; le liquide anti-gel tel que de l'eau glycolée constitue à cet égard le fluide à réfrigérer par échange thermique avec la glace dans le bac.

Naturellement, il y a lieu de fabriquer initialement puis de reconstituer la glace, dans le bac, au fur et à mesure qu'elle fond par échange thermique avec le fluide à réfrigérer et, à cet effet, on peut utiliser deux modes de production de glace, dans l'un et l'autre cas par évolution d'un fluide réfrigéré dans le bac.

Un premier mode de production met en oeuvre la détente directe d'un gaz approprié tel que le mélange gazeux désigné par la marque enregistrée "Fréon", à titre de fluide réfrigéré, à l'intérieur d'un circuit parcourant le bac et se raccordant par ailleurs, à l'extérieur de celui-ci, à une machine frigorifique traditionnelle, comportant un compresseur, un condenseur et un détendeur.

Un deuxième mode de production consiste à utiliser à titre de fluide réfrigéré le fluide à réfrigérer lui-même, à savoir le liquide antigel tel que de l'eau glycolée, qui, à l'extérieur du bac, traverse alors un échangeur dans lequel il est placé en relation d'échange thermique avec une batterie d'évaporation d'un gaz tel que du fréon, fourni par une machine frigorifique comportant également traditionnellement un compresseur, un condenseur et un détendeur, avant d'être réintroduit dans le bac où il restitue les frigories ainsi accumulées pour produire de la glace.

L'incorporation d'un bac de production et de stockage de glace à un dispositif de réfrigération de fluide est particulièrement intéressante en termes d'économie d'énergie puisqu'elle offre la possibilité de produire et de stocker de la glace, c'est-à-dire des frigories, dans les périodes de la journée ou de la semaine, dites "heures creuses", pendant lesquelles l'énergie nécessaire à cet effet, en pratique de l'électricité alimentant le compresseur de la machine frigorifique, est la moins chère, pour répondre au maximum aux besoins, en frigories, des autres périodes de la journée ou de la semaine, c'est-à-dire pour permettre de se dispenser dans toute la mesure du possible de mettre en route le compresseur, et par conséquent de consommer de l'énergie, pendant ces autres périodes de la journée ou de la semaine pendant lesquelles, à la fois, l'énergie est la plus chère et les besoins en réfrigération se font généralement le plus sentir ; les frigories alors nécessaires à l'alimentation de la batterie froide de l'installation de traitement d'air associée sont au moins pour l'essentiel fournies par échange thermique du fluide à réfrigérer, à savoir le liquide anti-gel tel que de l'eau glycolée, avec la glace produite et stockée entre-temps ; naturellement, même pendant ces périodes, la machine frigorifique peut être mise en route pour effectuer un apport de frigories au fluide à réfrigérer si les besoins le nécessitent.

Toutefois, dans leurs modes de réalisation actuellement connus, les dispositifs de réfrigération de fluide à bac de production et de stockage de glace présentent un certain nombre d'inconvénients.

L'utilisation d'eau glycolée ou autre liquide anti-gel en tant que fluide à réfrigérer dans le bac et, éventuellement, en tant que fluide réfrigéré en vue de la production de glace, présente les inconvénients inhérents à toute utilisation de liquide, à savoir la nécessité de prévoir des canalisations appropriées de raccordement par exemple avec la batterie froide du dispositif de traitement d'air, des vannes de commande de débit et de sécurité, des raccords entre les différentes parties des circuits correspondants présentant une étanchéité appropriée, et des dispositifs de contrôle et de régulation complexes et coûteux ; elle entraîne la nécessité de contrôler, périodiquement, le remplissage des circuits correspondants ainsi que la teneur du liquide en antigel et certaines réparations ou opérations de maintenance nécessitent une vidange complète puis un remplissage complet de ces circuits, ce qui est contraignant, long en main-d'oeuvre ainsi qu'en temps d'arrêt du dispositif de réfrigération en cas d'avarie ou, même, lors de certaines opérations de maintenance ; en outre, les conséquences d'une fuite éventuelle d'eau glycolée ou autre liquide anti-gel en termes de souillure et d'endommagement des locaux avoisinant le dispositif sont importants.

Lorsque, en outre, on utilise à titre de fluide réfrigéré, destiné à produire la glace, un fluide initialement liquide se vaporisant par détente directe dans un circuit nové pratiquement en permanence dans la glace, à l'intérieur du bac à glace, il y a lieu de prévoir de nombreuses précautions destinées à éviter toute fuite dans ce circuit, compte tenu du danger que présentent les gaz tels que le fréon, utilisés pour la production de froid par évaporation à détente directe ; de plus, la mise en oeuvre pratique de la détente directe est, de façon générale, difficile, compte tenu notamment des risques d'entraînement d'huile de lubrification du compresseur dans le circuit de détente directe, où cette huile reste et s'accumule progressivement au détriment du fonctionnement du dispositif.

Lorsque le fluide à réfrigérer lui-même, à savoir un liquide anti-gel tel que de l'eau glycolée, est utilisé en tant que fluide réfrigéré destiné à produire la glace dans le bac, les dispositifs de réfrigération connus présentent en outre l'inconvénient d'un encombrement important, lié au nombre et à l'encombrement des composants nécessaires.

On a récemment proposé, dans EP-A-0 441 553, un appareil de conditionnement d'air dans lequel l'air à conditionner lui-même circule, en tant que fluide à réfrigérer, à l'intérieur d'un bac de production et de stockage de glace pour y être placé en relation d'échange thermique direct avec la glace, produite quant à elle dans le bac par détente directe d'un fluide approprié passant de l'état liquide à l'état gazeux lors de cette détente. La circulation de l'air à conditionner lui-même dans le bac, à titre de fluide à réfrigérer, et la production de la glace par détente directe permettent d'éviter les inconvénients inhérents à l'utilisation d'un liquide anti-gel tel que de l'eau glycolée, mais les inconvénients inhérents à la production de froid par détente directe subsistent.

Le but de la présente invention est de remédier au moins partiellement, et si possible totalement, à ces inconvénients et, à cet effet, la présente invention propose un dispositif de réfrigération de fluide du type indiqué en préambule, mettant en oeuvre un fluide gazeux à titre de fluide à réfrigérer comme le propose EP-A-0 441 553 et caractérisé en ce que le fluide réfrigéré est également un fluide gazeux et en ce que les moyens pour le faire circuler dans le bloc comportent, à l'extérieur de celui-ci, une batterie d'échange thermique entre le fluide réfrigéré et un fluide frigorigène.

Par "fluide gazeux", on entend ici un fluide restant à l'état gazeux dans toutes les conditions de température et de pression auxquelles ce fluide, qu'il s'agisse du fluide réfrigéré ou du fluide à réfrigérer, peut être soumis au moins lors de sa circulation dans le bac. Il peut s'agit de tout gaz ou mélange gazeux remplissant cette condition, étant entendu que l'on choisit de préférence un gaz ou mélange gazeux ne présentant pas de danger même en cas d'avarie, tel qu'un gaz inerte ou de l'air, ces exemples n'étant nullement limitatifs. Dans toute la mesure du possible, l'un, au moins, des fluides respectivement réfrigéré et à réfrigérer est de l'air ; de préférence, ces deux fluides sont de l'air.

Les conséquences d'une éventuelle fuite d'un fluide gazeux ainsi défini, notamment d'air sont naturellement beaucoup moins graves, dans la plupart des cas, que celles d'une fuite d'un liquide anti-gel tel que de l'eau glycolée ou de fréon si bien qu'un dispositif de réfrigération de fluide selon l'invention peut être considéré comme offrant une sécurité beaucoup plus grande que celle des dispositifs de réfrigération de fluide actuellement connus ; naturellement, l'utilisation d'air comme fluide réfrigéré et comme fluide à réfrigérer est préférée lorsque le dispositif de réfrigération selon l'invention fonctionne à l'air libre, dans la mesure où toute opération de contrôle de remplissage des circuits d'air, de purge et de remplissage à nouveau en cas d'intervention sur les circuits d'air est superflue et l'air ne nécessite aucune addition d'antigel, ce qui simplifie et accélère considérablement les opérations de maintenance. En outre, les dispositifs de commande de débit d'un fluide gazeux, notamment d'air sont à la fois beaucoup plus simples, beaucoup plus fiables et beaucoup moins coûteux que ceux que l'on utilise pour commander des débits de liquide, de façon générale, que l'on considère les dispositifs commandant activement le débit, à savoir des ventilateurs lorsqu'il s'agit d'un fluide gazeux tel que de l'air alors que des pompes sont nécessaires lorsqu'il s'agit de liquide, ou que l'on considère les dispositifs commandant passivement le débit, à savoir des registres ou clapets lorsqu'il s'agit d'un fluide gazeux tel que de l'air alors que des vannes ou des soupapes sont nécessaires lorsqu'il s'agit de liquide. Il en est de même des raccords entre les différentes parties du circuit, dont l'étanchéité est beaucoup plus facile à réaliser.

Un dispositif selon l'invention se prête ainsi à une réalisation sous une forme simple, économique et compacte tout en offrant une sécurité et un confort de maintenance accrus.

En outre, un dispositif selon l'invention présente un rendement optimal, que ce soit en termes d'échange thermique entre le fluide réfrigéré et la glace ou en termes d'échange thermique entre la glace et le fluide à réfrigérer, l'ensemble de ces échanges s'effectuant à l'intérieur du bac, directement, c'est-à-dire sans perte de frigories autres que celles qui peuvent s'effectuer, dans un dispositif selon l'invention comme dans les dispositifs de l'Art antérieur, à travers les parois du bac de production et de stockage de glace.

Selon le cas, le dispositif selon l'invention peut comporter des moyens pour faire circuler indépendamment l'un de l'autre, dans le bac, le fluide réfrigéré et le fluide à réfrigérer qui peuvent alors être éventuellement différents l'un de l'autre, bien que l'on préfère utiliser de l'air dans l'un et l'autre cas, ou bien des moyens pour faire circuler en alternance, dans le bac, le fluide réfrigéré et le fluide à réfrigérer qui doivent alors être compatibles et sont alors, de préférence, mutuellement identiques.

Un dispositif selon l'invention dans lequel le fluide réfrigéré et le fluide à réfrigérer évoluent indépendamment l'un de l'autre dans le bac, c'est-à-dire évoluent dans des circuits ne présentant entre eux aucune communication permettant le passage du fluide réfrigéré et du fluide à réfrigérer de l'un à l'autre des circuits, même si ces fluides sont de même nature, présente l'avantage de rendre mutuellement indépendants la production de glace dans le bac, par l'intermédiaire du fluide réfrigéré, et le prélèvement de frigories à partir de cette glace, par le fluide à réfrigérer, ce qui offre une grande souplesse de fonctionnement puisque cette production et ce prélèvement peuvent être éventuellement simultanés au lieu d'être dissociés suivant les périodes de la journée ou de la semaine, par exemple si les besoins en frigories en dehors des heures creuses dépassent provisoirement la capacité de restitution du bac en frigories. En outre, un tel dispositif selon l'invention est particulièrement bien adapté à une incorporation à une installation de traitement d'air dans laquelle on peut prévoir d'utiliser directement l'air à traiter comme fluide à réfrigérer, traversant le bac de production et de stockage de glace par un circuit propre, alors que le fluide réfrigéré peut également être constitué par de l'air, de préférence déshumidifié, circulant toutefois en circuit fermé ; l'humidité éventuellement véhiculée par l'air à traiter, dans des proportions qui peuvent varier largement, ne présente pas d'inconvénient réel même si elle a tendance à se condenser ; néanmoins, des moyens sont avantageusement prévus pour évacuer du bac les condensats qui pourraient provenir du fluide à réfrigérer.

De façon particulièrement simple, économique et efficace, les moyens alors prévus pour faire circuler indépendamment l'un de l'autre, dans le bac, le fluide réfrigéré et le fluide à réfrigérer comportent au moins un groupe d'au moins deux faisceaux tubulaires plats, respectivement pour le fluide réfrigéré et pour le fluide à réfrigérer, mutuellement juxtaposés et traversant le bac en y délimitant au moins un espace de production et de stockage de glace ; on obtient ainsi un mode de réalisation particulièrement compact et efficace, en termes d'échange thermique entre la glace, d'une part, les fluides réfrigérés et à réfrigérer, d'autre part, surtout si les faisceaux respectivement pour le fluide réfrigéré et pour le fluide à réfrigérer sont mutuellement croisés ou encore présentent la même orientation et sont parcourus dans des sens mutuellement opposés par le fluide réfrigéré et le fluide à réfrigérer, respectivement.

Avantageusement, les faisceaux tubulaires plats sont placés dans une relation de recouvrement mutuel intégral et délimitent ledit espace, respectivement chaque espace de production et de stockage de glace, par une paroi libre de l'un deux.

On évite dans toute la mesure du possible la formation et le gel de condensats dans le fluide à réfrigérer au passage du faisceau correspondant du bac, ce qui est particulièrement important lorsqu'il s'agit d'air provenant d'un local avec une hygrométrie variable, éventuellement importante, si l'on prend la précaution de disposer les faisceaux tubulaires plats, dans ledit groupe, de telle sorte qu'un faisceau tubulaire plat pour le fluide réfrigéré soit intercalé entre un faisceau tubulaire plat pour le fluide à réfrigérer et un espace de production et de stockage de glace. En outre, cette disposition favorise les échanges thermiques entre le fluide réfrigéré et la glace, certes au détriment des échanges thermiques entre la glace et le fluide à réfrigérer sans que cela est toutefois de conséquences véritablement néfastes dans la mesure où l'on ne cherche généralement pas à porter ce fluide à réfrigérer à une température aussi basse que celle de la glace.

Le long de parois du bac, on peut respecter cette condition au moyen d'un groupe d'un premier type, ne comportant que deux faisceaux tubulaires plats, à raison d'un faisceau pour le fluide réfrigéré, placé au contact direct de l'espace de fabrication et de stockage de glace, et d'un faisceau pour le fluide à réfrigérer, jouxtant une paroi, de préférence thermiquement isolée, du bac. On peut réaliser de façon particulièrement simple et économique un tel groupe de deux faisceaux tubulaires plats sous forme de trois parois plates, mutuellement parallèles, dont l'une peut avantageusement être constituée par une paroi du bac et qui sont raccordées mutuellement par des cloisons mutuellement parallèles définissant les faisceaux pour le fluide réfrigéré et pour le fluide à réfrigérer, entre les parois. Dans le cas d'un groupe dissocié d'une paroi du bac, on respecte cette condition en prévoyant, selon un deuxième type, que ce groupe comporte un faisceau tubulaire plat pour le fluide à réfrigérer, intercalé entre deux faisceaux tubulaires plats pour le fluide réfrigéré. On peut réaliser de façon particulièrement simple et économique un tel groupe de trois faisceaux tubulaires plats sous forme de quatre parois plates, mutuellement parallèles, raccordées mutuellement par des cloisons mutuellement parallèles définissant les faisceaux pour le fluide réfrigéré et pour le fluide à réfrigérer, entre les parois ; naturellement, dans ce cas également, on préfère orienter le faisceau tubulaire plat pour le fluide à réfrigérer de façon croisée, par exemple à 90°, par rapport aux deux faisceaux tubulaires plats destinés au fluide réfrigéré ou encore orienter identiquement les trois faisceaux tubulaires plats et faire circuler le fluide à réfrigérer à contre-courant du fluide réfrigéré.

Selon les cas, un peut prévoir par le bac un seul desdits groupes, notamment du deuxième type, par exemple selon un plan de symétrie du bac, entre deux espaces de fabrication et de stockage de glace, ou encore deux desdits groupes, notamment du premier type, le long de deux parois mutuellement parallèles du bac et respectivement de part et d'autre d'un unique espace de fabrication et de stockage de glace, ce qui convient à des bacs particulièrement plats selon une direction perpendiculaire aux faisceaux tubulaires plats.

Si les impératifs d'encombrement du bac perpendiculairement au faisceau tubulaire plat le permettent, on préfère toutefois prévoir dans un même bac de production et de stockage de glace une pluralité desdits groupes, notamment deux groupes du premier type et un ou plusieurs groupes du deuxième type, disposés mutuellement parallèlement de telle sorte que les faisceaux pour le fluide réfrigéré présentent la même orientation et que les faisceaux pour le fluide à réfrigérer présentent également la même orientation, qui est de préférence croisée par rapport à celle des faisceaux pour le fluide réfrigéré, auquel cas les faisceaux pour le fluide réfrigéré sont raccordés mutuellement par des moyens collecteurs de fluide réfrigéré et les faisceaux pour le fluide à réfrigérer sont raccordés mutuellement par des moyens collecteurs de fluide à réfrigérer.

Le bac de production et de stockage de glace destiné à la réalisation d'un dispositif de réfrigération de fluide selon l'invention comporte en outre, de préférence des moyens d'évacuation des condensats du faisceau, respectivement des faisceaux pour le fluide à réfrigérer.

Comme on l'a dit précédemment, lorsqu'un dispositif selon l'invention comporte des moyens pour faire circuler indépendamment l'un de l'autre, dans le bac, le fluide réfrigéré et le fluide à réfrigérer, ces moyens comportent de préférence un circuit fermé pour le fluide réfrigéré ; en pratique, ces moyens peuvent avantageusement comporter, à l'extérieur du bac, un circuit de fluide réfrigéré fermé sur le faisceau, respectivement les faisceaux, pour le fluide réfrigéré et comportant la batterie d'échange thermique entre le fluide réfrigéré et le fluide frigorigène et un ventilateur de circulation du fluide réfrigéré, placé en amont de la batterie d'échange thermique en référence à un sens déterminé de circulation du fluide réfrigéré. La batterie d'échange thermique est de préférence alors placée directement en amont du faisceau, respectivement des faisceaux, pour le fluide réfrigéré en référence audit sens de circulation du fluide réfrigéré, ce qui offre un rendement thermique optimal de l'ensemble formé par la batterie d'échange thermique et le bac en termes de fabrication de glace.

Une telle circulation du fluide réfrigéré en circuit fermé, indépendamment de la circulation du fluide à réfrigérer et notamment sans introduction du fluide à réfrigérer dans ce circuit fermé même si le fluide réfrigéré et le fluide à réfrigérer sont de même nature, et par exemple sont constitués par de l'air permet de limiter de façon prédéterminée l'hygrométrie du fluide réfrigéré, de façon à limiter les risques de condensation et de prise en glace de celui-ci dans le circuit correspondant et notamment dans la batterie d'échange thermique, quelle que puisse être l'hygrométrie du fluide à réfrigérer, laquelle peut être très variable et parfois importante lorsqu'il s'agit d'air prélevé dans un local ou à l'extérieur pour être injecté dans ce local soit dans le cadre d'une installation de réfrigération seulement, soit dans le cadre d'une installation de climatisation offrant également des possibilités de chauffage ; les risques de prise en glace des condensats éventuels du fluide à réfrigérer sont pratiquement nuls du fait que celui-ci ne traverse pas la batterie froide, et ces condensats éventuels peuvent être évacués par des moyens appropriés associés au faisceau, respectivement aux faisceaux, pour le fluide à réfrigérer, notamment au niveau des éventuels moyens collecteurs correspondants.

Un dispositif selon l'invention dans lequel des moyens sont prévus pour faire circuler en alternance, dans le bac, le fluide réfrigéré et le fluide à réfrigérer, alors l'un et l'autre constitués avantageusement par de l'air, convient plus particulièrement lorsqu'il s'agit non seulement de réfrigérer cet air, mais également de le déshumidifier par condensation de l'eau qu'il peut véhiculer ; le bac est alors équipé de moyens convenables d'évacuation des condensats du fluide à réfrigérer.

Ces moyens pour faire circuler en alternance, dans le bac, le fluide réfrigéré et le fluide à réfrigérer, comportent avantageusement au moins un faisceau tubulaire plat, traversant le bac en y délimitant, avantageusement par une paroi libre, au moins un espace de production et de stockage de glace, et des moyens pour faire circuler alternativement l'un ou l'autre des fluides respectivement réfrigéré et à réfrigérer dans ledit faisceau, lequel faisceau peut avantageusement être défini de façon particulièrement simple et économique par deux parois plates, mutuellement parallèles, raccordées mutuellement par des cloisons mutuellement parallèles.

Le faisceau tubulaire plat dans lequel on fait ainsi circuler alternativement l'un ou l'autre des fluides respectivement réfrigéré ou à réfrigérer peut être unique, et de préférence placé alors en position centrale dans le bac de façon à y définir deux espaces de production et de stockage de glace, c'est-à-dire à être entouré de glace, ou être prévu en une pluralité d'exemplaires, disposés mutuellement parallèlement de façon à présenter la même orientation et à délimiter deux à deux des espaces de production et de stockage de glace, les différents faisceaux étant alors raccordés mutuellement par des moyens collecteurs.

Dans la mesure où l'un, au moins, des fluides respectivement réfrigéré et à réfrigérer peut être chargé d'humidité, appelée à se condenser à la traversée du bac par l'intermédiaire du faisceau ou des faisceaux, le bac comporte de préférence des moyens d'évacuation des condensats ainsi formés dans le faisceau, respectivement les faisceaux.

Dans cette variante, le dispositif selon l'invention se prête tout particulièrement à une utilisation en tant que dispositif de réfrigération et de déshumidification d'un fluide unique, par exemple de l'air prélevé d'un local ou à l'extérieur pour être injecté dans ce local, ou encore au voisinage ou à l'intérieur d'une machine devant travailler en ambiance d'hygrométrie commandée, comme c'est par exemple le cas de certaines machines de l'industrie textile ou de l'industrie des composants électroniques ; à cet effet, les moyens pour faire circuler en alternance, dans le faisceau, respectivement les faisceaux, le fluide réfrigéré et le fluide à réfrigérer comportent, à l'extérieur du bac, un circuit principal de fluide unique constituant en alternance le fluide réfrigéré et le fluide à réfrigérer et parcourant ledit circuit principal dans un sens déterminé, ledit circuit principal comportant la batterie d'échange thermique entre le fluide unique et le fluide frigorigène et un ventilateur de circulation du fluide unique, placé en amont de la batterie d'échange thermique en référence audit sens déterminé et refoulant à travers celle-ci, et une dérivation qui inclut le faisceau, respectivement les faisceaux du bac et débouche dans ledit circuit principal d'une part par une première embouchure située en amont du ventilateur de circulation et d'autre part par une deuxième embouchure située en aval de la batterie d'échange thermique, en référence audit sens, ainsi que par des moyens de communication entre d'une part la dérivation, dans une zone de celle-ci située entre le faisceau, respectivement les faisceaux, du bac et sa deuxième embouchure, et d'autre part ledit circuit principal, dans une zone de celui-ci située entre la première embouchure et le ventilateur de circulation ainsi que des premiers moyens d'obturation commandée du circuit principal entre lesdits moyens de communication et la première embouchure de la dérivation, des deuxièmes moyens d'obturation commandée du circuit principal, en aval de la deuxième embouchure de la dérivation, des troisièmes moyens d'obturation commandée de la deuxième embouchure de la dérivation et des quatrièmes moyens d'obturation commandée de ladite communication.

Un Homme du métier comprend aisément que, dans de telles conditions, on puisse, en fermant les deuxièmes et quatrièmes moyens d'obturation et en ouvrant les premiers et troisièmes moyens d'obturation, provoquer au moyen du ventilateur une circulation du fluide unique selon un circuit traversant d'abord la batterie d'échange thermique puis le faisceau ou les faisceaux du bac à glace pour revenir au ventilateur et éventuellement accomplir à nouveau le même circuit, le fluide jouant alors le rôle de fluide réfrigéré utilisé pour fabriquer de la glace dans le bac, ou bien, en fermant plus ou moins les premiers moyens d'obturation et totalement les troisièmes moyens d'obturation tout en ouvrant les deuxièmes et, plus ou moins, les quatrièmes moyens d'obturation, autoriser le passage du fluide par la dérivation, à travers le faisceau ou les faisceaux du bac à glace, pour reprendre au passage les frigories accumulées précédemment dans la glace et d'une part se refroidir, d'autre part perdre son humidité par condensation au contact des parois glacées des faisceaux, avant d'être réintroduit dans le circuit principal dans lequel le ventilateur l'achemine vers une utilisation, par exemple un local ou une machine à alimenter en air réfrigéré et déshumidifié ; les condensats sont évacués du faisceau, respectivement des faisceaux, par les moyens précédemment indiqués ; enfin, si les troisièmes et quatrièmes moyens d'obturation sont fermés alors que les premiers et deuxièmes moyens d'obturation sont ouverts, seul le circuit principal est parcouru par de l'air qui, ainsi, est acheminé vers l'utilisation sans traverser la dérivation et par conséquent sans subir de déshumidification, mais en subissant éventuellement un refroidissement à sa traversée de la batterie d'échange thermique.

Compte tenu de l'intérêt que présentent les applications précitées d'un dispositif de réfrigération de fluide selon l'invention, la présente invention s'étend également à de telles applications.

D'autres caractéristiques et avantages des différents aspects de l'invention ressortiront de la description ci-dessous, relative à des exemples non limitatifs de mise en oeuvre, ainsi que des dessins annexés qui font partie intégrante de cette description.
- La figure 1 illustre schématiquement, en élévation latérale avec arrachement partiel, une installation de traitement d'air comportant un dispositif selon l'invention mettant en oeuvre un bac à glace avec circulations mutuellement indépendantes du fluide réfrigéré et du fluide à réfrigérer, l'un et l'autre gazeux et constitués par exemple l'un et l'autre par de l'air.
- La figure 2 montre une vue de cette installation en coupe par un plan repéré en II-II à la figure 1.
- La figure 3 montre une vue partielle, en perspective, des groupes de faisceaux tubulaires plats prévus dans le bac à glace en vue de la circulation mutuellement indépendante du fluide réfrigéré et du fluide à réfrigérer.
- Les figures 4, 5, 6 montrent des vues schématiques, en coupe, d'une même installation de traitement d'un fluide gazeux tel que de l'air par réfrigération et déshumidification dans trois états différents, correspondant à des phases différentes de fonctionnement de cette installation, le fluide à traiter tel que de l'air constituant alternativement le fluide réfrigéré et le fluide à réfrigérer et traversant les mêmes faisceaux tubulaires plats d'un bac à glace dans un sens ou dans l'autre suivant le cas.
- La figure 7 montre une vue en perspective des faisceaux tubulaires plats prévus dans ce cas à l'intérieur du bac à glace.
- La figure 8 illustre, en une vue en perspective, une variante de réalisation des groupes de faisceaux tubulaires plats illustrés à la figure 3, propres à assurer à l'intérieur du bac à glace la circulation mutuellement indépendante du fluide réfrigéré et du fluide à réfrigérer, l'un et l'autre gazeux et constitués par exemple l'un et l'autre par de l'air, en relation d'échange thermique avec la glace.

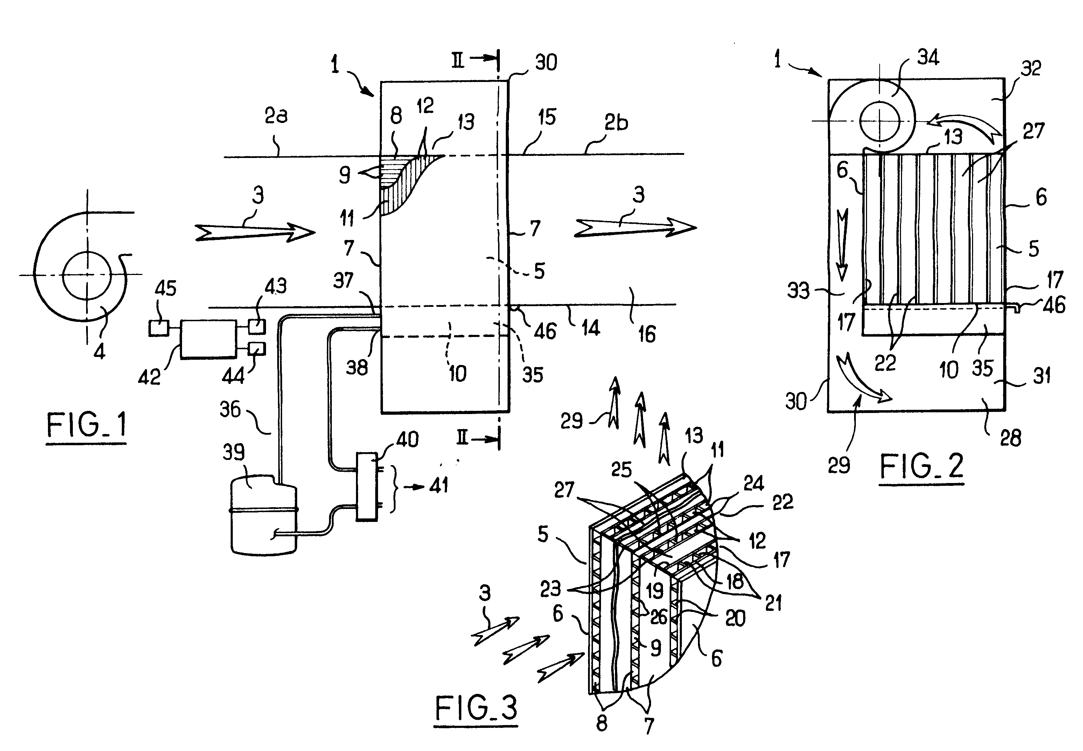

On se réfèrera en premier lieu aux figures 1 à 3 qui illustrent un dispositif de réfrigération 1 selon l'invention intercalé entre deux tronçons 2a, 2b d'une gaine par exemple horizontale véhiculant un flux d'air de sens 3, également horizontal, qui arrive en tant que fluide à réfrigérer, par le tronçon 2a, en provenance d'un local dont on désire traiter l'air avant de l'y réinjecter et/ou de l'extérieur, grâce à des moyens connus d'un Homme du métier et dont on n'a représenté qu'un ventilateur 4, et qui quitte le dispositif selon l'invention 1 après réfrigération, par le tronçon 2b, en vue d'une réinjection dans le local considéré.

Au passage, entre les tronçons 2a et 2b, l'air à réfrigérer traverse de part en part sans être dévié, c'est-à-dire ici horizontalement, un bac 5 de production et de stockage de glace dont un exemple préféré de réalisation va être décrit à présent, plus particulièrement en référence à la figure 3.

Ce bac 5 présente la forme générale d'un parallélépipède rectangle défini, si l'on considère comme référence de longitudinalité le sens 3 ici horizontal, par :
- deux parois latérales 6 plates, mutuellement parallèles, orientées longitudinalement et verticalement, ces deux parois latérales 6 étant continues et étanches,
- deux parois frontales 7 également plates, mutuellement parallèles et verticales mais transversales, raccordant deux à deux les parois latérales 6 respectivement face au tronçon 2a et face au tronçon 2b, ces deux parois frontales 7 étant étanches, se raccordant de façon étanche aux deux parois latérales 6 mais présentant localement, suivant plusieurs alignements verticaux régulièrement répartis entre les parois latérales 6, des embouchures de faisceaux tubulaires plats respectifs 8, mutuellement parallèles, dont chacun est formé de la superposition, en direction verticale, de tubes 9 rectilignes, longitudinaux, c'est-à-dire horizontaux, dont chacun débouche ainsi dans l'une et l'autre des parois 7, respectivement vers le tronçon 2a et vers le tronçon 2b,
- une paroi de fond 10 plate, longitudinale et horizontale, étanche et se raccordant de façon étanche aux deux parois latérales 6 comme aux deux parois frontales 7, cette paroi de fond 10 présentant suivant des alignements longitudinaux, régulièrement répartis entre les parois latérales 6, des embouchures de faisceaux tubulaires plats respectifs 11 mutuellement parallèles, dont chacun est formé de la juxtaposition longitudinale d'une pluralité de tubes verticaux 12 dont chacun débouche ainsi d'une part vers le bas dans la paroi de fond 10 et d'autre part vers le haut, dans une face d'extrémité supérieure 13 du bac 5, laquelle face 13 est plane, horizontale, et délimite vers le haut les parois latérales 6 et les parois frontales 7.

Chacun des faisceaux tubulaires plats 8, 11 s'étend de l'une à l'autre des parois frontales 7 et de la paroi de fond 10 à la face supérieure 13 du bac 5, sans discontinuité.

La paroi de fond 10 et la face d'extrémité supérieure 13 du bac 5 sont respectivement de niveau avec une paroi inférieure 14 et avec une paroi supérieure 15, l'une et l'autre horizontales, des tronçons 2a et 2b de gaîne, lesquels sont par ailleurs délimités par deux parois latérales 16 respectives verticales, prolongeant longitudinalement respectivement l'une et l'autre des parois latérales 6 du bac 5, chacun des tronçons 2a et 2b et le bac 5 présentant ainsi des sections transversales respectives rectangulaires, éventuellement carrées, mutuellement identiques.

On observera que les faisceaux tubulaires plats 8 et les faisceaux tubulaires plats 11, les uns et les autres à la fois longitudinaux et verticaux, sont non seulement mutuellement parallèles mais également parallèles aux parois latérales 6 du bac 5.

De préférence, comme il est illustré, ces faisceaux 8 et 11 sont mutuellement groupés, et ceci de façon différente suivant qu'ils se situent le long de l'une des parois latérales 6 du bac 5 ou qu'ils se situent en position intermédiaire entre ces parois latérales 6, si l'on se réfère à un mode de réalisation préféré illustré à la figure 3, étant entendu que d'autres modes de réalisation pourraient être choisis sans que l'on sorte pour autant du cadre de la présente invention.

Si l'on se réfère à la figure 3, le long de chacune des parois latérales 6 du bac 5 est disposé un groupe respectif 17 de deux faisceaux tubulaires plats, à raison d'un faisceau tubulaire 8, dont les tubes 9 sont orientés longitudinalement, directement accolé à la paroi latérale 6 considérée, et d'un faisceau tubulaire 11, dont les tubes 12 sont orientés verticalement, directement accolé au faisceau tubulaire plat 8 précité, naturellement dans l'un et l'autre cas entre les deux parois latérales 6 du bac 5, c'est-à-dire à l'intérieur de celui-ci. De préférence, comme il est illustré, chaque groupe 17 est formé de l'association de trois parois plates étanches, mutuellement parallèles, à raison de la paroi latérale 6 correspondante et de deux autres parois 18, 19 situées entre les deux parois latérales 6 ; chacune de ces parois 18, 19 se raccorde de façon étanche aux parois frontales 7 ainsi qu'à la paroi de fond 10 du bac 5 et s'étend par ailleurs jusqu'à la face d'extrémité supérieure 13 de celui-ci. La paroi 18, située entre la paroi 19 et la paroi latérale 6 considérée, est raccordée à cette dernière par une pluralité de cloisons 20 plates, longitudinales, horizontales, c'est-à-dire en outre mutuellement parallèles, et étanches qui délimitent deux à deux ainsi qu'avec les parois latérales 6 et 18 les différents tubes 9 du faisceau 8 ; de même, la paroi 19 est raccordée à la paroi 18 par une pluralité de cloisons 21 plates, transversales, c'est-à-dire mutuellement parallèles et verticales, et étanches qui délimitent deux à deux, ainsi qu'avec les parois 18 et 19, les différents tubes 12 du faisceau 11 considéré ; les cloisons 20 s'étendent ainsi de l'une à l'autre des parois frontales 7 du bac 5, et les cloisons 21 s'étendent de la paroi de fond 10 jusqu'à la face d'extrémité supérieure 13 de ce bac 5.

Entre les deux groupes 17, associés aux parois latérales 6 et comportant ainsi chacun un faisceau tubulaire plat 8 et un faisceau tubulaire plat 11, est disposé au moins un groupe 22 de trois faisceaux tubulaires à raison de deux faisceaux tubulaires 11 entourant un faisceau tubulaire 8 auquel ils sont accolés ; dans l'exemple illustré à la figure 2, on a ainsi prévu sept groupes intermédiaires 22, ce chiffre n'étant naturellement indiqué qu'à titre d'exemple non limitatif.

Chaque groupe 22 est défini par quatre parois plates, mutuellement parallèles, à raison de deux parois extrêmes 23 et de deux parois intermédiaires 24, qui sont étanches et s'étendent longitudinalement de l'une à l'autre des parois frontales 7, auxquelles elles se raccordent de façon étanche, et verticalement de la paroi de fond 10, à laquelle elles se rattachent de façon étanche, jusqu'à la face d'extrémité supérieure 13 du bac 5. Chacune des parois extrêmes 23 est raccordée à la paroi intermédiaire 24 respectivement la plus proche par une pluralité de cloisons 25 plates, mutuellement parallèles, orientées transversalement par rapport au sens 3, étanches et s'étendant de la paroi de fond 10 jusqu'à la face extrême supérieure 13 du bac 5 pour définir entre elles, ainsi qu'entre la paroi extrême 23 et la paroi intermédiaire 24 associée, les tubes 12 d'un faisceau tubulaire 11 respectif. De même, les deux parois intermédiaires 24 sont raccordées mutuellement par une pluralité de cloisons plates 26 mutuellement parallèles, longitudinales et plus précisément horizontales, et étanches qui s'étendent de l'une à l'autre des parois frontales 7 et définissent entre elles, ainsi qu'entre les parois intermédiaires 24, les différents canaux 9 d'un faisceau 8.

L'espacement transversal mutuel des parois 18 et 6, de même que les caractéristiques dimensionnelles des cloisons 20 et 26, sont choisis de telle sorte que, considérés dans leur ensemble, les canaux 9 offrent à l'air passant du tronçon 2a au tronçon 2b, qui jouent vis-à-vis de ces canaux le rôle de collecteur d'entrée et de collecteur de sortie, respectivement, et constituant le fluide à réfrigérer au moyen du dispositif selon l'invention 1 une section transversale de passage suffisante, de façon aisément déterminable par un Homme du métier.

De même, l'écartement transversal mutuel des parois 18 et 19 de chaque groupe 17 et celui de chaque paroi 23 d'un groupe 22 par rapport à la paroi intermédiaire 24 respectivement la plus proche sont choisis, conjointement avec le dimensionnement des cloisons 21 et 25, de telle sorte que l'ensemble des tubes 12 offre une section horizontale de passage suffisante à un fluide réfrigéré traversant le bac 5 verticalement par les tubes 12, en pratique de bas en haut, en parcourant un circuit fermé qui va être décrit à présent plus particulièrement en référence à la figure 2, afin de fabriquer à l'intérieur du bac 5 de la glace dans laquelle le fluide à réfrigérer, à savoir l'air transitant par les tronçons 2a et 2b, pourra puiser des frigories au fur et à mesure des besoins.

Afin d'assurer le stockage de cette glace, les groupes 22 sont espacés transversalement, à l'intérieur du bac, d'une part de façon mutuelle et d'autre part vis-à-vis des groupes 17, par exemple selon une répartition uniforme suivant une direction transversale horizontale, de telle sorte qu'entre des parois extrêmes 23 appartenant à deux groupes 22 mutuellement voisins de même qu'entre la paroi 19 de chaque groupe 17 et la paroi 23 du groupe 22 directement voisin subsistent, entre des parois frontales 7 du bac 5, au-dessus de la paroi de fond 10 de celui-ci et jusqu'à sa face extrême supérieure 13, des espaces 27 qui, à la mise en route du dispositif 1, peuvent recevoir de l'eau que l'on transforme en glace qu'ensuite, une alternance de prélèvements et d'apports de frigories fait fondre et régénère alternativement.

On remarque que dans chacun des groupes 17 et 22, les tubes 9 véhiculant le fluide à réfrigerer, à savoir de l'air dans l'exemple illustré, ne sont placés au contact de la glace que par l'intermédiaire des tubes 12 destinés à véhiculer le fluide réfrigéré, lesquels sont quant à eux placés au contact direct des espaces 27 de production et de stockage de glace, étant entendu que les parois 18, 19, 23, 24 sont réalisées en des matériaux offrant une bonne conductibilité thermique afin d'autoriser des échanges thermiques non seulement entre le fluide réfrigéré et la glace, mais également entre la glace et le fluide à réfrigérer ; par contre, les parois latérales 6 du bac 5 sont avantageusement isolées thermiquement.

Le circuit fermé précité 28, parcouru par le fluide réfrigéré, en pratique de l'air déshumidifié, dans un sens indiqué par une flèche 29, ascendant à l'intérieur des tubes 12, est défini à l'extérieur du bac 5 par un carter transversal 30 fermé de façon étanche sur le bac 5 et comportant sous la paroi de fond 10 de celui-ci un collecteur d'entrée 31, au-dessus de la face extrême supérieure 18 de celui-ci un collecteur de sortie 32, et le long de l'une des parois 6 du bac 5 une gaine 33 raccordant mutuellement les deux collecteurs 31 et 32, et parcourue dans un sens vertical descendant par le fluide réfrigéré.

La circulation de celui-ci à l'intérieur du circuit fermé 28, dans le sens 29, est provoquée par un ventilateur de circulation 34 logé dans le collecteur de sortie 32 notamment quant à son aspiration, et refoulant dans la gaine 33, vers le bas et vers le collecteur d'entrée 31.

A l'intérieur de ce collecteur d'entrée 31, immédiatement en dessous de la paroi de fond 10 du bac 5 et sur la totalité de l'étendue de cette paroi de fond 10, c'est-à-dire immédiatement en amont des tubes 12 des faisceaux 11 si l'on se réfère au sens 29, est disposée une batterie 35 d'échange thermique entre le fluide réfrigéré, avant la pénétration de celui-ci dans les tubes 12 des faisceaux 11, et un fluide frigorigène fourni à la batterie d'échange thermique 35 par une machine frigorifique 36 extérieure au bac 5 et au circuit fermé 28 et comportant successivement, d'une sortie 37 de fluide frigorigène hors de la batterie d'échange thermique 35 à une entrée 38 pour ce fluide frigorigène dans la batterie d'échange thermique 35, un compresseur 39 et un condenseur 40 raccordé à un circuit 41 d'évacuation de calories, d'une façon connue d'un Homme du métier.

Les ventilateurs 4 et 34 ainsi que la machine frigorifique 36 sont commandés, par exemple de façon automatique en fonction d'un programme mémorisé dans une électronique de commande et de contrôle 42, sous l'influence de capteurs 43 tels qu'un capteur de température dans le local à réfrigérer, et d'une horloge 45, et/ou au moyen d'une commande manuelle 44, par exemple selon le cycle suivant.

Les ventilateurs 4 et 34 de même que le compresseur 39 de la machine frigorifique 36 étant supposés fonctionner à l'électricité, fournie à un tarif préférentiel à certaines heures de la nuit ou de la semaine ou heures creuses et au tarif normal, plus coûteux, hors de ces heures creuses, on produit de la glace à l'intérieur du bac 5, afin d'y accumuler des frigories, pendant les heures creuses ; à cet effet, alors que le ventilateur 4 est à l'arrêt, la machine frigorifique 36 fonctionne de même que le ventilateur 34, si bien que de l'air réfrigéré à sa traversée de la batterie d'échange thermique 35 parcourt les différents tubes 12 de bas en haut en se déchargeant de ses frigories au bénéfice de l'eau présente dans les espaces 27, laquelle se transforme en glace.

Hors des heures creuses, le compresseur 39 est normalement arrêté, et le ventilateur 4, à vitesse variable ou non, fonctionne, de façon commandée en fonction des besoins, pour faire traverser le bac 5 par l'air à réfrigérer, par l'intermédiaire des tubes 9 parcourus dans le sens longitudinal 3, et réfrigérer cet air au passage, par échange thermique avec la glace présente dans les espaces 27 par l'intermédiaire de l'air réfrigéré circulant en permanence dans les tubes 12 sous l'action du ventilateur 34, avant de l'injecter à l'état réfrigéré dans le local d'utilisation ; avantageusement, le ventilateur 34 est un ventilateur à vitesse variable permettant de moduler l'échange entre l'air à réfrigérer et la glace, et donc de stabiliser la température de cet air, à sa sortie du bac 5, en fonction des frigories accumulées dans celui-ci ; en cas de besoin, si la demande de froid au niveau du local ou de la machine d'utilisation excède la charge du bac 5 en frigories, un complément de puissance peut être assuré par redémarrage du compresseur 39.

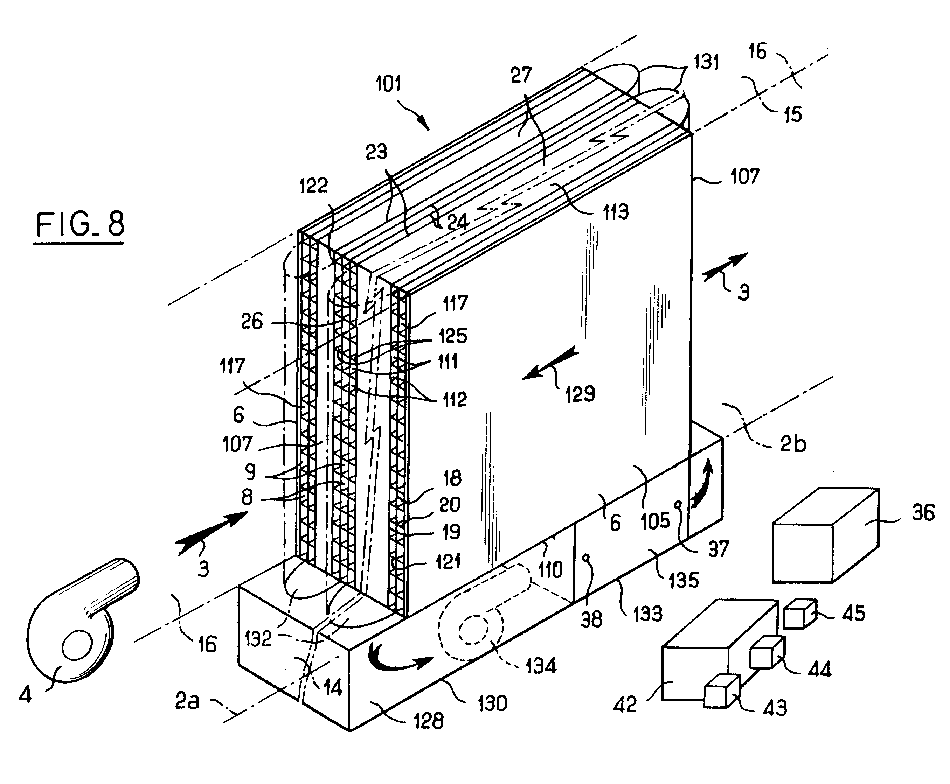

Naturellement, des conceptions différentes du bac 5 pourraient également convenir à un tel fonctionnement et on a illustré à la figure 8 un exemple non limitatif d'une telle conception.

On a repris à la figure 8 les mêmes références numériques qu'aux figures 1 à 3 pour désigner des composants identiques à ceux qui ont été décrits en référence à ces figures 1 à 3, et des références incrémentées de 100 par rapport aux références utilisées aux figures 1 à 3 pour désigner des composants qui, tout en correspondant à des composants décrits en référence aux figures 1 à 3, présentent une conception plus ou moins différente.

On trouve ainsi à la figure 8 les références numériques 101, 2a, 2b, 3, 4, 105, 6, 107, 8, 9, 110, 111, 112, 113, 14, 15, 16, 117, 18, 19, 20, 121, 122, 23, 24, 125, 26, 27, 128, 129, 130, 131, 132, 133, 134, 135, 36, 37, 38, 42, 43, 44, 45, pour désigner des composants correspondant, dans ces conditions, aux composants décrits respectivement sous les références numériques 1 à 38 et 42 à 45 à propos des figures 1 à 3.

Les différences entre les dispositifs de réfrigération 101 illustrés à la figure 8 et le dispositif de réfrigération 1 illustré aux figures 1 à 3 résultent essentiellement de différences entre le bac 105 illustré à la figure 8 et le bac 5 illustré aux figures 1 à 3.

En effet, dans le bac 105, au lieu d'être verticales comme les cloisons 21 et 25, les cloisons 121 et 125 sont horizontales, si bien que dans chaque groupe 117, 122, les tubes 112 du faisceau 111 ou des faisceaux 111, respectivement, sont eux-mêmes horizontaux et débouchent non pas dans la paroi de fond 110 du bac 10 5, alors continue, et dans la face d'extrémité supérieure 113 de ce bac 105, alors fermée de façon étanche au-dessus de chacun des groupes 117, 122, mais dans les parois frontales 107 du bac 105 qui ne sont alors fermées, de façon étanche, qu'en regard des espaces 27 de production et de stockage de glace.

De ce fait, les tubes 112 des faisceaux tubulaires plats 111 guident le fluide réfrigéré selon une trajectoire horizontale à l'intérieur du bac 105.

De préférence, ce parcours s'effectue à contre-courant du parcours du fluide à réfrigérer, c'est-à-dire dans un sens horizontal 129 opposé au sens 3.

A cet effet, à la face frontale 107 tournée vers l'aval en référence au sens 3 est accolé un collecteur d'entrée 131 pour le fluide réfrigéré, sous forme d'une pluralité de goulottes verticales, fermées à leur extrémité supérieure, débouchant à leur extrémité inférieure dans une gaine horizontale 133 définie par un carter 130 accolé à la paroi 110 du bac 105 et, de façon localisée à proximité immédiate de celui-ci, à la paroi inférieure 14 des tronçons 2a et 2b. Dans l'exemple illustré, chacune des goulottes 131 chevauche un espace 27 respectif de façon à communiquer, de façon étanche, avec les tubes 112 des faisceaux 111 jouxtant immédiatement celui-ci, naturellement en laissant les faisceaux 8 en libre communication avec le tronçon 2a, mais on pourrait également prévoir d'autres modes de réalisation, selon lesquels, par exemple, une goulotte serait prévue pour chaque faisceau 111 respectivement.

De même, à la face frontale 107 du bac 105 tournée vers l'amont en référence au sens 3 est accolé un collecteur de sortie 132, sous forme de goulottes verticales en tout point identiques aux goulottes définissant le collecteur d'entrée 131 et notamment, comme ces dernières, fermées vers le haut alors qu'elles débouchent vers le bas dans la gaine 133 ; comme les goulottes définissant le collecteur d'entrée 131, ces goulottes, qui n'entravent pas la communication des faisceaux 8 avec le tronçon 2a, sont respectivement communes à deux faisceaux 111 disposés respectivement de part et d'autre d'un même espace 27 dans l'exemple illustré mais, les goulottes définissant le collecteur d'entrée 131, pourraient également présenter une conception différente.

Le carter 130, la gaine 133, les collecteurs d'entrée 131 et de sortie 132, et les faisceaux 111 définissent ainsi un circuit fermé 128 que l'air, réfrigéré à la traversée d'une batterie d'échange thermique 135 en tout point analogue à la batterie d'échange thermique 35 mais disposée à l'intérieur du carter 130, parcourt sous l'action d'un ventilateur de circulation 134 en tout point analogue au ventilateur de circulation 34 mais disposé à l'intérieur du carter 130.

On remarquera que le fait que les tubes 9 véhiculant le fluide à réfrigérer, tel que de l'air, ne soient pas placés au contact direct de la glace présente dans les espaces 27, mais soient dans une certaine mesure isolés thermiquement de cette glace par les tubes 12 ou 112 qui, généralement, véhiculent le fluide réfrigéré simultanément au passage de fluide à réfrigérer par les tubes 9, permet d'éviter dans une large mesure la condensation de l'humidité éventuellement contenue dans le fluide à réfrigérer, et les déperditions de puissance frigorifique qui s'ensuivraient ; la condensation éventuelle peut être suffisamment faible pour être entraînée avec le flux de fluide à réfrigérer ; cependant, il peut être préférable, comme on l'a schématisé aux figures 1 et 2, de prévoir immédiatement en aval du bac 5 en référence au sens 3 du flux de fluide à réfrigérer, au niveau de la paroi de fond 10 du bac 5 ou de la paroi de fond 110 du bac 105, de façon toutefois non illustrée, une goulotte 46 approximativement horizontale s'étendant de l'une à l'autre des parois latérales 6 du bac, c'est-à-dire sous les embouchures respectives de tous les tubes 9 de tous les faisceaux 8, pour recueillir les condensats et les évacuer vers l'extérieur du bac 5 et du tronçon 2b, et notamment à l'égout.

Dans la mesure où le fluide réfrigéré évolue quant à lui en circuit fermé 28 ou 128, on peut limiter son hygrométrie de telle sorte qu'il n'y ait pas de risque de condensation à l'intérieur de ce circuit fermé 28 ou 128.

Les conceptions du bac à glace 5 ou 105 qui viennent d'être décrites en référence aux figures 1 à 3 et à la figure 8 sont donc particulièrement adaptées au cas où l'on cherche à éviter la formation de condensats dans le fluide à traiter, mais on peut également concevoir le bac à glace d'un dispositif selon l'invention de telle sorte qu'au contraire, il se produise dans le fluide à traiter une condensation de l'humidité éventuellement charriée par ce fluide, afin d'assurer une déshumidification commandée de celui-ci. Ainsi, si le dispositif selon l'invention tel qu'il a été décrit en référence aux figures 1 à 3 ou à la figure 8 convient plus particulièrement au cas où le fluide à réfrigérer peut charrier des quantités éminamment variables d'humidité, comme ce peut être le cas lorsqu'il s'agit d'air prélevé dans un local pour y être réinjecté après réfrigération, simplement pour assurer le refroidissement du local considéré, on va décrire à présent un dispositif selon l'invention plus particulièrement adapté non seulement au refroidissement d'un fluide à réfrigérer mais également à la déshumidification de celui-ci, par formation de condensats dans le bac à glace.

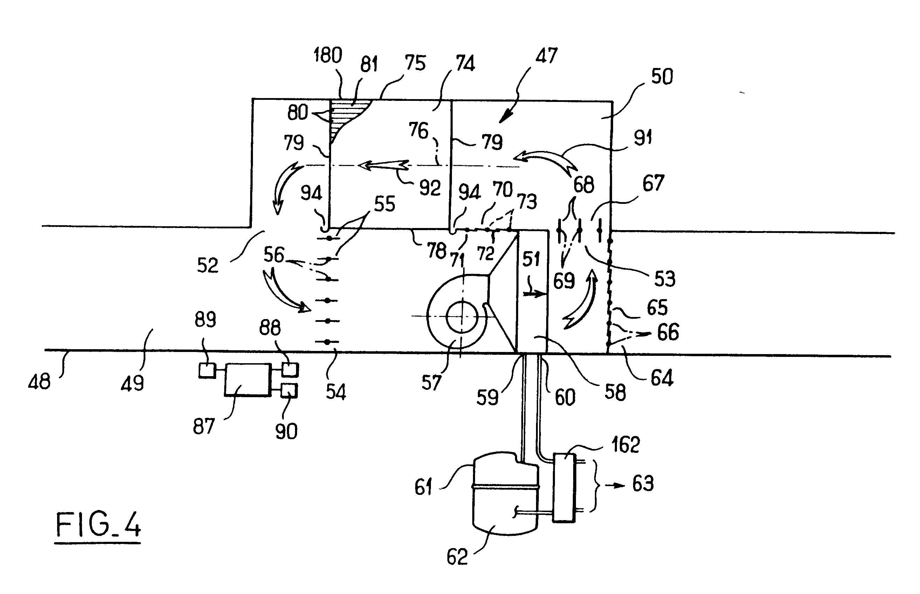

Aux figures 4 à 6, on a désigné par 47 le dispositif selon l'invention, logé pour partie à l'intérieur d'une gaine 48 définissant un circuit principal 49 de fluide à réfrigérer et déshumidifier, et pour partie dans une dérivation localisée 50 de cette gaine 48 ou de ce circuit principal 49 ; le circuit principal 49 est destiné à être parcouru dans un sens déterminé 51 par le fluide à réfrigérer et déshumidifier, tel que de l'air, lequel provient par exemple de l'intérieur d'un local et/ou de l'extérieur et est destiné à être réinjecté dans ce local ou injecté dans une machine après réfrigération et déshumidification.

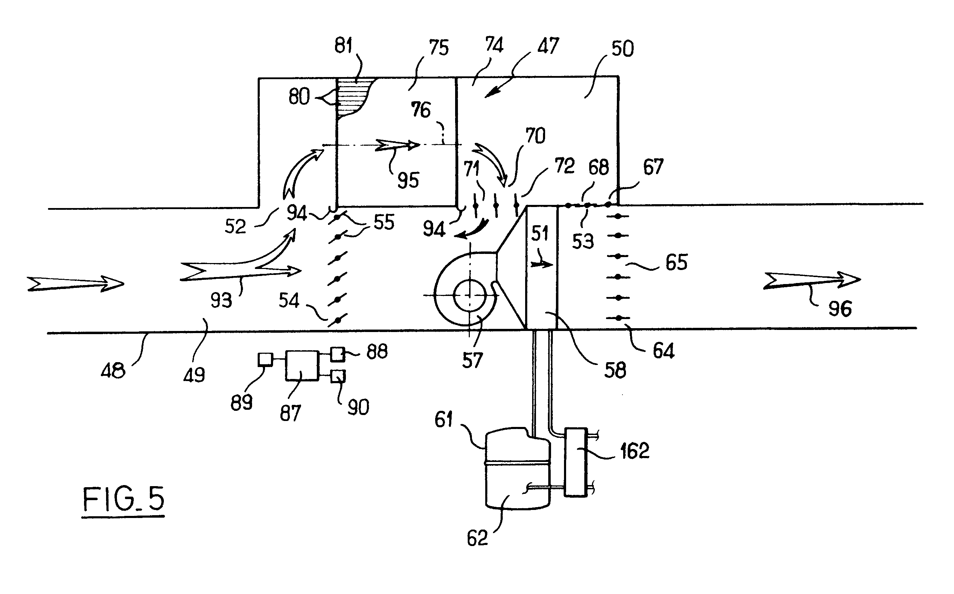

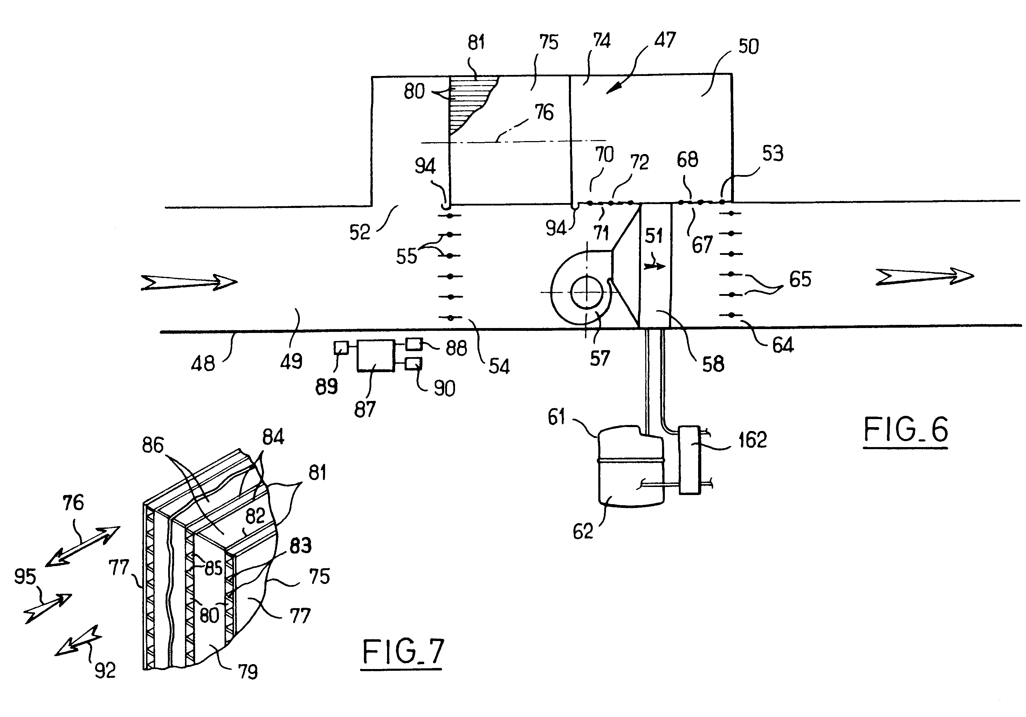

En référence au sens 51, ce circuit principal 49 ou la gaine 48 présente successivement une embouchure amont 52 de la dérivation 50 et une embouchure aval 53 de cette dérivation 50. Immédiatement en aval de l'embouchure 52, c'est-à-dire notamment en amont de l'embouchure 53, la gaine 48 présente intérieurement des moyens d'obturation commandée 54 se présentant par exemple sous la forme de registres 55 susceptibles de pivoter de façon commandée, à l'intérieur de la gaine 48, autour d'axes horizontaux respectifs 56 entre une position, illustrée aux figures 4 et 5, dans laquelle ils dégagent totalement la section de passage de la gaine 48, au moins une position illustrée à la figure 6 dans laquelle ils obturent partiellement cette section de passage et, éventuellement, une position non illustrée dans laquelle ils obturent totalement la section de passage.

Egalement en référence au sens 51, la gaine 48 comporte successivement de l'amont vers l'aval, entre les moyens d'obturation commandée 54 et l'embouchure 53 de la dérivation 50, un ventilateur de circulation 57 de préférence à vitesse variable de façon commandée, provoquant une circulation du fluide à réfrigérer et déshumidifier de l'amont vers l'aval, et une batterie d'échange thermique 58 orientée perpendiculairement au sens 51 et occupant la totalité de la section de la gaine 48 ainsi que du refoulement du ventilateur 57 pour assurer un échange thermique entre le fluide à réfrigérer et déshumidifier qui la traverse sous l'effet du ventilateur 57, d'une part, et un fluide frigorigène circulant d'une part dans cette batterie d'échange thermique 58 et d'autre part à l'extérieur de celle-ci, entre une sortie 59 de ce fluide frigorigène et une entrée 60 de ce fluide frigorigène, dans une machine frigorifique 61 comportant notamment un compresseur 62 et un condenseur 162 par ailleurs raccordé à un circuit 63 d'évacuation de calories, d'une façon connue d'un Homme du métier. En outre, immédiatement en aval de l'embouchure 53 de la dérivation 50 si l'on se réfère au sens 51, la gaine 48 présente des moyens 64 d'obturation commandée du circuit principal 49, lesquels moyens 64 se présentent par exemple comme les moyens 54 sous la forme de registres 65 susceptibles d'évoluer de façon commandée, par pivotement autour d'axes horizontaux respectifs 66, entre une position d'obturation totale de la gaine 48 et du circuit principal 49, illustrée à la figure 4, et une position d'ouverture totale, dans laquelle ils dégagent totalement la section de la gaine 48 en vue du passage du fluide de l'amont vers l'aval, comme on l'a illustré aux figures 5 et 6.

En outre sont prévus des moyens 67 d'obturation commandée de l'embouchure 53 de la dérivation 50, par exemple sous la forme de registres 68 pivotant de façon commandée, autour d'axes 69 ici horizontaux compte tenu d'un positionnement de la dérivation 50 immédiatement au-dessus de la gaine 48, entre une position d'ouverture totale de l'embouchure 53, entre la dérivation 50 et la gaine 48 ou le circuit principal 49, comme le montre la figure 4, et une position d'obturation totale de l'embouchure 53, empêchant tout passage de fluide entre la dérivation 50 et la gaine 48 ou le circuit principal 49, comme on l'a illustré aux figures 5 et 6.

De plus, la dérivation 50 est susceptible de communiquer avec la gaine 48 et le circuit principal 49 non seulement par ses embouchures amont 52 et aval 53, mais également par des moyens de communication présentant la forme d'une embouchure auxiliaire 70 vers la gaine 48 et le circuit principal 49, immédiatement en amont de la batterie d'échange thermique 58 si l'on se réfère au sens 51 et de façon à ne pouvoir communiquer avec cette batterie d'échange thermique 58 qu'à travers le ventilateur de circulation 57, c'est-à-dire fonctionnellement entre l'embouchure amont 52 et l'aspiration de ce ventilateur 57. Cette embouchure auxiliaire 70 est munie, comme l'embouchure 53, de moyens d'obturation commandée 71 qui présentent dans l'exemple illustré la forme de registres 72 susceptibles de pivoter, de façon commandée, autour d'axes horizontaux 73 entre une position dans laquelle ils obturent totalement l'embouchure 70 comme le montrent les figures 4 et 5 et une position dans laquelle ils dégagent totalement cette embouchure 70 comme le montre la figure 6.

Entre l'embouchure amont 52 et l'embouchure auxiliaire 70, la dérivation 50 présente une zone horizontale 74, susceptible d'être parcourue horizontalement par le fluide à réfrigérer et déshumidifier comme il apparaîtra plus loin, laquelle zone horizontale 74 présente une section de préférence carrée, intégralement occupée par un bac 75 de fabrication et de stockage de glace qui va être décrit à présent plus particulièrement en référence à la figure 7.

Si l'on considère comme référence de longitudinalité une direction horizontale 76 de parcours de la zone horizontale 74 de la dérivation 50 entre l'embouchure amont 52 et l'embouchure aval 53 ou l'embouchure auxiliaire 70, laquelle direction 76 est avantageusement parallèle au sens 51 de parcours du circuit principal 49 par le fluide à réfrigérer et déshumidifier, le bac 75 est délimité par deux parois latérales plates 77, mutuellement parallèles, verticales et longitudinales, isolées thermiquement et définissant avantageusement des parois de la dérivation 50, ainsi que par une paroi de fond 78 également plate et longitudinale mais horizontale, isolée thermiquement et pouvant avantageusement constituer une paroi de délimitation entre la dérivation 50 et la gaine 48 ou le circuit principal 49 ; il est en outre délimité par deux parois frontales 79 plates, mutuellement parallèles, verticales et plus précisément transversales. Vers le haut, le bac 75 est obturé par une paroi supérieure 180 plate, longitudinale et horizontale, qui peut avantageusement être isolée thermiquement et se confondre avec une paroi de la dérivation 50.

Les parois 77, 78, 79 sont étanches et se raccordent mutuellement de façon étanche ; la paroi 180, également étanche, ne se raccorde de façon étanche qu'aux parois latérales 77 mais laisse subsister un jeu vertical vis-à-vis des parois frontales 79 de telle sorte que le bac 75 soit ouvert vers le haut à l'intérieur de la dérivation 50, de façon non visible aux figures mais aisément concevable par un Homme du métier.

Comme les parois frontales 7 du bac 5, les parois frontales 79 du bac 75 présentent, suivant des alignements verticaux avantageusement régulièrement répartis de l'une à l'autre des parois latérales 77, des embouchures de tubes longitudinaux 80 de faisceaux tubulaires respectifs 81 plats, à la fois longitudinaux et verticaux, s'étendant d'une part verticalement de la paroi de fond 78 du bac 75 à la paroi supérieure 180 de celui-ci et d'autre part longitudinalement de l'une à l'autre des parois frontales 79.

Chacun des faisceaux tubulaires plats 81 présente avantageusement une structure identique à celle de l'un, respectif, des faisceaux tubulaires plats 8 décrits en référence à la figure 3.

En d'autres termes, deux de ces faisceaux jouxtent directement les parois latérales 77 du bac 75 et sont définis respectivement par cette paroi latérale 77, par une paroi plate 82 étanche, parallèle à cette paroi 77 et se raccordant de façon étanche aux parois 78, 79 et 80, ainsi que par des cloisons longitudinales plates 83 horizontales, étanches, raccordant mutuellement les parois 77 et 82 en définissant avec elles les tubes 80. Entre ces faisceaux 81 extrêmes sont disposés plusieurs faisceaux 81 intermédiaires dont un seul est illustré à la figure 7, chacun de ces faisceaux 81 intermédiaires étant défini par deux parois plates 84 mutuellement parallèles, à la fois longitudinales et verticales, étanches et se raccordant de façon étanche à chacune des parois 78 et 80, ces deux parois 84 étant raccordées mutuellement par des cloisons 85 en tout point identiques aux cloisons 83 et s'étendant longitudinalement, comme ces dernières, de l'une à l'autre des parois frontales 79 du bac 75.

Naturellement, les tubes 80 sont calibrés, notamment par espacement mutuel approprié des parois 82 et 83 ainsi que des parois 84, de façon à offrir une section transversale de passage convenant pour le fonctionnement qui sera décrit ultérieurement.

En outre, les parois 84 de deux faisceaux 81 voisins, ainsi que la paroi 82 de chaque faisceau 81 adjacent à une paroi latérale 77 du bac et la paroi 84 du faisceau 81 immédiatement voisin, sont écartées mutuellement de façon à préserver entre les faisceaux 81 des espaces 86 fermés de façon étanche, sauf vers le haut entre les parois frontales 79 et la paroi supérieure 80, et destinés à recevoir de l'eau elle-même destinée à accumuler des frigories en se transformant en glace pour pouvoir restituer ces frigories en fondant, selon une séquence qui va être décrite à présent et qui peut être commandée en fonction d'un programme mémorisé dans une électronique de commande 87, sous l'influence de capteurs 88 tels que des capteurs de température et d'humidité dans le local ou la machine à alimenter en fluide réfrigéré et déshumidifié, tel que de l'air, d'une horloge 89 prenant en compte notamment les heures creuses pendant lesquelles l'énergie électrique alimentant le ventilateur 57 et le compresseur 62 est moins coûteuse, et/ou d'une commande manuelle 90.

La figure 4 illustre l'état du dispositif selon l'invention 47 correspondant à la fabrication et au stockage de glace dans le bac 74 en heures creuses.

Dans cet état, les registres 55 et 68 sont en position d'ouverture totale respectivement du circuit principal 49 à l'intérieur de la gaine 48 et de l'embouchure aval 53 de la dérivation 50, alors que les registres 65 et 72 sont en position de fermeture totale respectivement du circuit principal 49 à l'intérieur de la gaine 48 et de l'embouchure auxiliaire 70 de la dérivation 50. Le compresseur 62 est alimenté en électricité si bien qu'il provoque une circulation de fluide frigorigène, porté à basse température, dans la batterie d'échange thermique 58 et le ventilateur de circulation 57 est lui-même alimenté en électricité si bien qu'il provoque une circulation du fluide fourni à la gaine 48, c'est-à-dire du fluide à réfrigérer et déshumidifier lui-même, selon un circuit fermé 91 qui, successivement, lui fait traverser dans le sens 51 successivement les moyens d'obturation commandés 54, le ventilateur 57, la batterie d'échange thermique 58 au niveau de laquelle ce fluide se charge de frigories et se transforme donc en fluide réfrigéré avant d'être dévié vers l'embouchure aval 53 de la dérivation 50 par les registres 65 en position de fermeture et parcourir la zone horizontale 74 de la dérivation 50, c'est-à-dire les tubes 80 du bac 75, en sens longitudinal 92 opposé au sens 51 ; au passage du bac 75, le fluide réfrigéré au passage de la batterie d'échange thermique 58 fournit des frigories à l'eau qui se trouve dans les espaces 86 et qui gèle de ce fait ; ensuite, le fluide sort du bac 75 en s'étant réchauffé puis franchit l'embouchure amont 52 de la dérivation 50 pour revenir au ventilateur de circulation 57 à travers les moyens d'obturation commandée 54.

Les frigories ainsi accumulées sous forme de glace dans le bac 75 peuvent être ensuite restituées en dehors des heures creuses, comme on va le décrire à présent en référence à la figure 5.

Sur cette figure, le dispositif selon l'invention 47 se trouve dans un état dans lequel les registres 55 occupent une position de fermeture partielle du circuit principal 49, à l'intérieur de la gaine 48, pour obliger le fluide à réfrigérer et déshumidifier, fourni à cette dernière, à se répartir entre le circuit principal 49 et la dérivation 50 comme on l'a schématisé en 93, les registres 72 sont en position d'ouverture totale de l'embouchure 70 alors que les registres 68 sont en position d'obturation totale de l'embouchure 53 de façon à obliger le fluide passant par la dérivation 50 à revenir dans le circuit principal 49 par l'embouchure 70, au niveau de l'aspiration du ventilateur 57, après avoir franchi le bac 75 par les tubes 80, pour franchir ensuite la batterie d'échange thermique 58, et les registres 65 sont en position d'ouverture totale du circuit principal 49 à l'intérieur de la gaine 48. Dans ces conditions, le fluide à réfrigérer et déshumidifier traverse, dans une proportion réglée par orientation convenable des registres 55 de façon à obturer plus ou moins le circuit principal 49 à l'intérieur de la gaine 48 et par action du ventilateur 57, sous la commande de l'électronique de commande 87, les tubes 80 du bac 75, dans un sens longitudinal 95 opposé au sens 92, pour y être déshumidifié et réfrigéré, alors que la partie restante reste dans le circuit principal 49 où elle est également soumise à l'action du ventilateur 57; au passage des tubes 80, le fluide à réfrigérer et déshumidifié se refroidit et libère de l'eau sous forme de condensats qui sont repris par des goulottes appropriées 94 disposées transversalement, approximativement horizontalement, en bas de chacune des parois frontales 79, de l'une à l'autre des parois latérales 77, et débouchent à l'extérieur de la dérivation 50 comme de la gaine 48 par exemple vers l'égout ; les deux parties ainsi initialement dissociées du fluide à réfrigérer et déshumidifier se rejoignent à l'aspiration du ventilateur 57, immédiatement en amont de la batterie d'échange thermique 58, en référence au sens 51, et peuvent recevoir au niveau de cette batterie d'échange thermique 58 un complément de refroidissement, le compresseur 62 étant éventuellement mis en route à cet effet par l'électronique de commande 87, en fonction des besoins ; ensuite, le fluide poursuit sa progression dans le circuit principal 49 comme on l'a schématisé par une flèche 96 à la figure 5.

Naturellement, comme le montre la figure 6, le dispositif selon l'invention 47 peut également être neutralisé notamment lorsqu'une déshumidification du fluide n'est pas nécessaire, ce qui peut être constaté par les capteurs 88. Alors, les registres 55 et 65 sont placés en position d'ouverture totale du conduit principal 49, à l'intérieur de la gaine 48 alors que les registres 72 et 68 sont placés en position d'obturation totale respectivement de l'embouchure auxiliaire 70 et de l'embouchure amont 53 si bien que le fluide à réfrigérer, alors sans déshumidification, ne s'engage pas dans la dérivation 50 mais transite intégralement par le circuit principal 49, le ventilateur de circulation 57 et la batterie d'échange thermique 58 dans laquelle il reçoit éventuellement un apport de frigories en provenance du compresseur 62, mis en route si nécessaire par l'électronique de commande 87.

Le dispositif selon l'invention 47 fonctionne alors comme une installation conventionnelle de refroidissement et de déshumidification, dans laquelle non seulement le refroidissement mais également la déshumidification sont assurés au passage d'une batterie d'échange thermique comparable à la batterie d'échange thermique 58. On conçoit cependant aisément que, pour un même apport de frigories, c'est-à-dire pour un même refroidissement et une même déshumidification d'un fluide présentant initialement une température et une hygrométrie déterminées, l'utilisation du dispositif 47 selon l'invention dans les conditions décrites en référence aux figures 4 et 5, alternativement, selon que l'on se trouve en heures creuses où l'on a en principe pas besoin de fluide réfrigéré et déshumidifié ou en dehors des heures creuses où ce besoin apparaît, permet non seulement de réaliser des économies d'énergie en ne consommant de l'énergie qu'au moment où elle est la moins coûteuse, mais également de réduire la puissance et l'encombrement de la machine frigorifique 61 en comparaison avec une machine frigorifique qui, en l'absence de bac 75 de production et de stockage de glace, devrait être en mesure de répondre à chaque instant aux besoins en frigories de refroidissement et de déshumidification. En outre, lorsque conformément à la présente invention, la déshumidification est assurée au passage d'un bac à glace 75, la batterie d'échange thermique 58 n'a aucune rôle de déshumidification, mais uniquement un rôle de refroidissement, ce qui permet de la faire travailler à des températures comparativement supérieures et de faire fonctionner la machine frigorifique 61 dans des conditions optimales de rendement.

Naturellement, les deux applications d'un dispositif selon l'invention qui viennent d'être décrites ne constituent que des exemples non limitatifs, et un Homme du métier pourra prévoir d'autres applications sans sortir pour autant du cadre de la présente invention ; de même, un Homme du métier pourra concevoir différemment le bac de production et de stockage de glace, et notamment concevoir différemment les faisceaux tubulaires assurant les échanges thermiques entre le fluide réfrigéré assurant la formation de la glace et cette glace, d'une part, puis entre cette glace et le fluide à réfrigérer et, éventuellement, déshumidifier.

## Revendications

1. Dispositif de réfrigération de fluide, comprenant :
- un bac (5, 75, 105) de production et de stockage de glace,
- des moyens (11, 28, 34, 35, 50, 54, 57, 58, 64, 67, 71, 81, 111, 128, 134, 135) pour faire circuler dans le bac (5, 75, 105) un fluide réfrigéré en le plaçant en relation d'échange thermique avec la glace,
- des moyens (2a, 2b, 8, 48, 49, 50, 54, 64, 67, 71, 81) pour faire circuler dans le bac (5, 75, 105) un fluide à réfrigérer, gazeux, en le plaçant en relation d'échange thermique avec la glace,
caractérisé en ce que le fluide réfrigéré est également un fluide gazeux et en ce que les moyens (11, 28, 34, 35, 50, 54, 57, 58, 64, 67, 71, 81, 111, 128, 134, 135) pour le faire circuler dans le bac (5, 75, 105) comportent, à l'extérieur de celui-ci, une batterie (35, 58, 135) d'échange thermique entre le fluide réfrigéré et un fluide frigorigène.

2. Dispositif selon la revendication 1, caractérisé en ce que l'un, au moins, desdits fluides respectivement réfrigéré et à réfrigérer est de l'air.

3. Dispositif selon la revendication 2, caractérisé en ce que le fluide réfrigéré et le fluide à réfrigérer sont de l'air.

4. Dispositif selon l'une quelconque des revendications 1 à 3, caractérisé en ce qu'il comporte des moyens (11, 28, 34, 35, 111, 128, 134, 135, 2a, 2b, 8) pour faire circuler indépendamment l'un de l'autre, dans le bac (5, 105), le fluide réfrigéré et le fluide à réfrigérer.

5. Dispositif selon la revendication 4, caractérisé en ce que les moyens (11, 28, 34, 35, 111, 128, 134, 135, 2a, 2b, 8) pour faire circuler indépendamment l'un de l'autre, dans le bac (5, 105), le fluide réfrigéré et le fluide à réfrigérer comportent au moins un groupe (17, 22, 117, 122) d'au moins deux faisceaux tubulaires plats (11, 111, 8) mutuellement juxtaposés et traversant le bac (5, 105) en y délimitant au moins un espace (27) de production et de stockage de glace, respectivement pour le fluide réfrigéré et pour le fluide à réfrigérer.

6. Dispositif selon la revendication 5, caractérisé en ce que, dans ledit groupe (17, 22, 117, 122), un faisceau tubulaire plat (11, 111) pour le fluide réfrigéré est intercalé entre un faisceau tubulaire plat (8) pour le fluide à réfrigérer et un espace (27) de production et de stockage de glace.

7. Dispositif selon l'une quelconque des revendications 5 et 6, caractérisé en ce que ledit groupe (17, 117) est défini par au moins trois parois plates (6, 18, 19) mutuellement parallèles, raccordées mutuellement par des cloisons (20, 21, 121) mutuellement parallèles définissant les faisceaux (11, 8) pour le fluide réfrigéré et pour le fluide à réfrigérer, entre les parois (6, 18, 19).

8. Dispositif selon l'une quelconque des revendications 5 et 6, caractérisé en ce que ledit groupe (22, 122) comporte un faisceau tubulaire plat (8) pour le fluide à réfrigérer, intercalé entre deux faisceaux tubulaires plats (11, 111) pour le fluide réfrigéré.

9. Dispositif selon la revendication 8, caractérisé en ce que ledit groupe (22, 122) est défini par quatre parois plates (23, 24) mutuellement parallèles, raccordées mutuellement par des cloisons (25, 125, 26) mutuellement parallèles définissant les faisceaux (11, 111, 8) pour le fluide réfrigéré et pour le fluide à réfrigérer, entre les parois (23, 24).

10. Dispositif selon l'une quelconque des revendications 5 à 9, caractérisé en ce que les faisceaux (11, 8) respectivement pour le fluide réfrigéré et pour le fluide à réfrigérer sont mutuellement croisés.

11. Dispositif selon l'une quelconque des revendications 5 à 9, caractérisé en ce que les faisceaux (111, 8) respectivement pour le fluide réfrigéré et pour le fluide à réfrigérer présentent la même orientation et sont parcourus dans des sens (129, 3) mutuellement opposés par le fluide réfrigéré et le fluide à réfrigérer, respectivement.

12. Dispositif selon l'une quelconque des revendications 5 à 11, caractérisé en ce qu'il comporte une pluralité desdits groupes (17, 22, 117, 122), disposés mutuellement parallèlement de telle sorte que les faisceaux (11, 111) pour le fluide réfrigéré présentent la même orientation et que les faisceaux (8) pour le fluide à réfrigérer présentent la même orientation, et en ce que les faisceaux (11, 111) pour le fluide réfrigéré sont raccordés mutuellement par des moyens (31, 32, 131, 132) collecteurs de fluide réfrigéré et les faisceaux (8) pour le fluide à réfrigérer sont raccordés mutuellement par des moyens (2a, 2b) collecteurs de fluide à réfrigérer.

13. Dispositif selon l'une quelconque des revendications 5 à 12, caractérisé en ce que le bac (5) comporte des moyens (46) d'évacuation des condensats du faisceau (8), respectivement des faisceaux (8), pour le fluide à réfrigérer.

14. Dispositif selon l'une quelconque des revendications 5 à 13, caractérisé en ce que les moyens (11, 28, 34, 35, 111, 128, 134, 135) pour faire circuler le fluide réfrigéré dans le bac comportent, à l'extérieur de celui-ci, un circuit (28, 128) de fluide réfrigéré fermé sur le faisceau (11, 111), respectivement les faisceaux (11, 111), pour le fluide réfrigéré et comportant la batterie (35, 135) d'échange thermique entre le fluide réfrigéré et le fluide frigorigène et un ventilateur (34, 134) de circulation du fluide réfrigéré, placé en amont de la batterie (35, 135) d'échange thermique en référence à un sens déterminé (29, 129) de circulation du fluide réfrigéré.

15. Dispositif selon la revendication 14, caractérisé en ce que la batterie (35) d'échange thermique est placée directement en amont du faisceau (11), respectivement des faisceaux (11), pour le fluide réfrigéré en référence audit sens (29) de circulation du fluide réfrigéré.

16. Dispositif selon l'une quelconque des revendications 1 à 3, caractérisé en ce qu'il comporte des moyens (48, 49, 50, 54, 57, 58, 64, 67, 71, 81) pour faire circuler en alternance, dans le bac (75), le fluide réfrigéré et le fluide à réfrigérer.

17. Dispositif selon la revendication 16, caractérisé en ce que les moyens (42, 49, 50, 54, 57, 58, 64, 67, 71, 81) pour faire circuler en alternance, dans le bac (75), le fluide réfrigéré et le fluide à réfrigérer comportent au moins un faisceau tubulaire plat (81), traversant le bac (75) en y délimitant au moins un espace (86) de production et de stockage de glace, et des moyens(48, 49, 50, 54, 57, 58, 64, 67, 71, 81) pour faire circuler alternativement l'un ou l'autre des fluides respectivement réfrigéré et à réfrigérer dans ledit faisceau (81).

18. Dispositif selon la revendication 17, caractérisé en ce que ledit faisceau (81) est défini par deux parois plates (77, 82, 84), mutuellement parallèles, raccordées mutuellement par des cloisons (83, 85) mutuellement parallèles.

19. Dispositif selon l'une quelconque des revendications 17 et 18, caractérisé en ce qu'il comporte une pluralité desdits faisceaux (81), disposés mutuellement parallèlement de telle sorte qu'ils présentent la même orientation et raccordés mutuellement par des moyens collecteurs (50).

20. Dispositif selon l'une quelconque des revendications 17 à 19, caractérisé en ce que le bac (75) comporte des moyens (94) d'évacuation des condensats du faisceau (81), respectivement des faisceaux (81).

21. Dispositif selon l'une quelconque des revendications 17 à 20, caractérisé en ce que les moyens (48, 49, 50, 54, 57, 58, 64, 67, 71) pour faire circuler en alternance, dans le faisceau (81), respectivement les faisceaux (81), le fluide réfrigéré et le fluide à réfrigérer comportent, à l'extérieur du bac (75), un circuit principal (49) de fluide unique constituant en alternance le fluide réfrigéré et le fluide à réfrigérer et parcourant ledit circuit principal (49) dans un sens déterminé (51), ledit circuit principal (49) comportant la batterie d'échange thermique (58) entre le fluide unique et le fluide frigorigène et un ventilateur (57) de circulation du fluide unique, placé en amont de la batterie d'échange thermique (58) en référence audit sens déterminé (51) et refoulant à travers celle-ci, et une dérivation (50) qui inclut le faisceau (81), respectivement les faisceaux (81), du bac (75) et débouche dans ledit circuit principal (49) d'une part par une première embouchure (52) située en amont du ventilateur de circulation (57) et d'autre part par une deuxième embouchure (53) située en aval de la batterie d'échange thermique (58), en référence audit sens (51), ainsi que par des moyens (70) de communication entre d'une part la dérivation (50), dans une zone de celle-ci située entre le faisceau (81), respectivement les faisceaux (81), du bac (75) et sa deuxième embouchure (53) et d'autre part ledit circuit principal (49), dans une zone de celui-ci située entre la première embouchure (52) et le ventilateur de circulation (57), ainsi que des premiers moyens (54) d'obturation commandée du circuit principal (49) entre lesdits moyens de communication (70) et la première embouchure (52) de la dérivation (50), des deuxièmes moyens (64) d'obturation commandée du circuit principal (49) en aval de la deuxième embouchure (53) de la dérivation (50), des troisièmes moyens (67) d'obturation commandée de la deuxième embouchure (53) de la dérivation (50) et des quatrièmes moyens (71) d'obturation commandée de ladite communication (70).

22. Application d'un dispositif selon l'une quelconque des revendications 1 à 21 au traitement d'un air destiné à alimenter un local ou une machine et qui constitue le fluide à réfrigérer, dans un but de réfrigération et/ou de déshumidification de cet air.
